# EUROPÄISCHE PATENTSCHRIFT

(11) **EP 1 182 076 B1**
(45) Veröffentlichungstag und Bekanntmachung des Hinweises auf die Patenterteilung: **04.10.2006**
(21) Anmeldenummer: 01118208.6
(22) Anmeldetag: 28.07.2001
(51) Int. Cl.: B60K 28/10, B60K 28/04, B60K 25/00

(54) **Sicherheitsschaltung und Fahrzeug**
Safety circuit and vehicle
Circuit de sécurité et véhicule

(30) Priorität: 15.08.2000 US 639226
(43) Veröffentlichungstag der Anmeldung: 27.02.2002
(73) Patentinhaber: DEERE & COMPANY, Moline, Illinois 61265-8098 (US)
(72) Erfinder: Hough, Barry Michael, Beaver Dam, WI 53916 (US)
(74) Vertreter: Magin, Ludwig Bernhard

(56) Entgegenhaltungen:
- EP-A- 0 608 735
- US-A- 4 974 711
- US-A- 5 203 440
- US-A- 5 645 135
- US-A- 5 994 857

## Beschreibung

Die Erfindung betrifft eine Sicherheitsschaltung für ein Fahrzeug, welches sich auswählbar sowohl in Vorwärts- als auch in Rückwärtsrichtung über den Untergrund bewegen kann, mit einem Motor und einer Zapfwelle, welche mittels einer Bedieneinrichtung aktiviert bzw. deaktiviert werden kann, wobei die Sicherheitsschaltung einen Richtungswahlschalter, einen Zapfwellenschalter, der eine erste Stellung einnimmt, wenn die Zapfwelle aktiviert ist, und bei deaktivierter Zapfwelle eine zweite Stellung einnimmt, und einem Anwesenheitsschalter, der eine erste Stellung einnimmt, wenn die Bedienungsperson eine vorbestimmte Position auf dem Fahrzeug eingenommen hat, und eine zweite Stellung einnimmt, wenn die Bedienungsperson sich nicht in dieser Position befindet, sowie ein Fahrzeug.

Fahrzeuge, wie beispielsweise Rasen- und Gartentraktoren, mit einer Zapfwelle weisen häufig einen Sicherheitsschaltkreis mit mehreren Funktionen auf, welche ein Verhindern des Zapfwellenbetriebs bei Rückwärtsfahrt des Fahrzeugs umfassen. Unter bestimmten Bedingungen kann ein Betrieb der Zapfwelle während einer Rückwärtsfahrt des Fahrzeugs notwendig sein. Es wurden zu diesem Zweck verschiedene Überbrückunassysteme vorgeschlagen. Die US-A-5,994,857 zeigt eine gattungsgemäßen Sicherheitsschaltung, in der verschiedene Relais und ein Zapfwellenschalter vorgesehen sind, welche einen zeitweiligen Betrieb der Zapfwelle bei einer Fahrt in Rückwärtsrichtung ermöglichen. Bekannte Schaltkreise, wie der in der US-A-5,994,857 gezeigte, verwenden üblicherweise einen einpoligen Sitzschalter und benötigen separate Schaltkreise, um einen ordnungsgemäßen Betrieb der Überbrückungsfunktionen zu ermöglichen.

Das der Erfindung zugrunde liegende Problem wird darin gesehen, dass bekannte Sicherheitsschaltkreise zum Betrieb einer Zapfwelle aufwendig bzw. unbequem in der Handhabung sind.

Dieses Problem wird erfindungsgemäß durch die Lehre der Patentansprüche 1 bzw. 7 gelöst, wobei in den weiteren Patentansprüchen die Lösung in vorteilhafter Weise weiterentwickelnde Merkmale aufgeführt sind.

Auf diese Weise wird eine Sicherheitsschaltung zur Verfügung gestellt, welche einen Sicherheitskreis mit einem vorzugsweise zweipoligen Anwesenheitsschalter und einem durch eine Bedienungsperson zu betätigenden Tast- bzw. Druckschalter aufweist, welcher mit einem Halterelais in Verbindung steht, um einen durch die Bedienungsperson initiierten Betrieb der Zapfwelle und somit der Betrieb eines Anbaugeräts bei einem Betrieb des Fahrzeugs in Rückwärtsrichtung zu ermöglichen. Ein solcher Anwesenheitsschalter kann in der Art einer Totmannschaltung ausgebildet sein. Vorzugsweise ist er aber, insbesondere bei einem selbstfahrenden Fahrzeug mit einer Bedienerplattform oder einer Kabine, als ein Sitzschalter ausgebildet, dessen Stellung davon abhängig ist, ob eine Bedienungsperson auf einem Fahrzeugsitz Platz genommen hat. Üblicherweise ist ein solcher Anwesenheitsschalter geschlossen, wenn die Bedienungsperson die vorbestimmte Stellung einnimmt und geöffnet, wenn dies nicht der Fall ist. Das System liefert eine Haltefunktion, welche durch eine Bedienungsperson jedes Mal, wenn das Fahrzeug auf einen Fahrbetrieb in Rückwärtsrichtung umgeschaltet wird, zu betätigen ist.

Es kann vorgesehen sein, dass das Fahrzeug bzw. ein Motor des Fahrzeugs deaktiviert wird, wenn das Fahrzeug auf Rückwärtsbetrieb umgeschaltet wird, wenn die Zapfwelle aktiviert ist und der Tastschalter nicht betätigt wird. Der Motor kann auch abgestellt werden, wenn eine Bedienungsperson den Sitz verlässt bzw. der Anwesenheitsschalter nicht die Stellung einnimmt, in der er sich befindet, wenn die Bedienungsperson eine vorbestimmte Position einnimmt, und ein Betrieb in Rückwärtsrichtung erfolgen soll.

Eine solche Sicherheitsschaltung ist einfach und kostengünstig und benötigt nur ein einziges Halterelais, wodurch Kosten und Komplexität eines Aufbaus mit mehreren Relais vermieden werden. Darüber hinaus kann, wenn der Anwesenheitsschalter als ein zweipoliger Schalter ausgebildet ist, der Zapfwellenschalter von dem Bremsschalter getrennt werden, so dass die Sicherheitsschaltung sowie die Verkabelung, insbesondere von Anzeigen bzw. Anzeigeleuchten, vereinfacht werden kann.

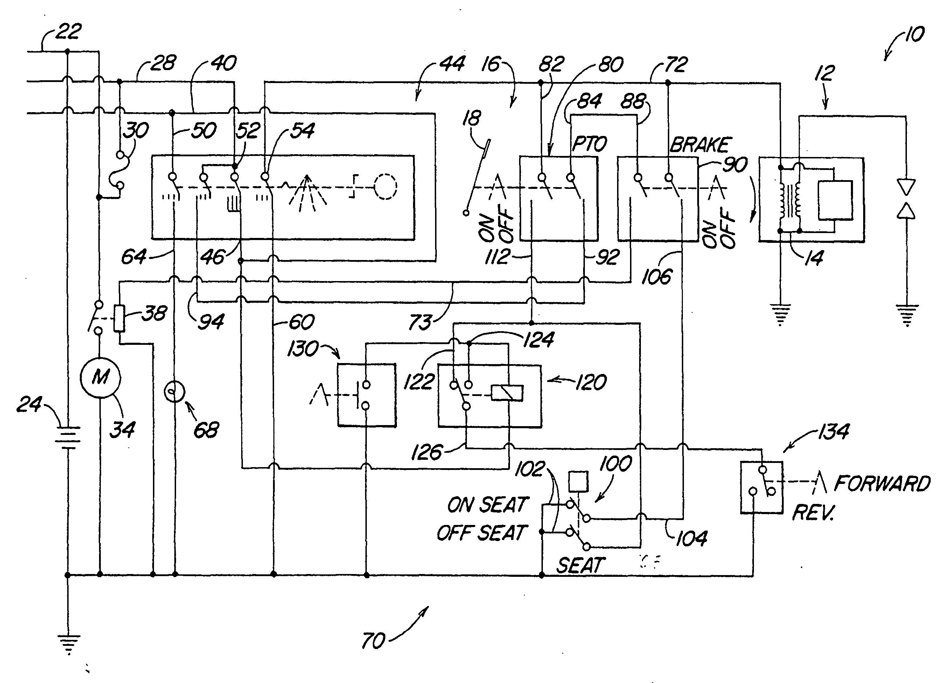

In der Zeichnung ist ein nachfolgend näher beschriebenes Ausführungsbeispiel der Erfindung dargestellt. Die einzige Figur zeigt eine Sicherheitsschaltung für ein Fahrzeug wie einen Rasen- und Gartentraktor, mit einem Sicherheitsschaltkreis zum Betrieb einer Zapfwelle, wenn das Fahrzeug seinen Rückwärtsfahrt-Betriebszustand einnimmt.

Mit Bezug auf die einzige Figur wird eine Sicherheitsschaltung für ein Fahrzeug 10, wie einen Rasen- und Gartentraktor, mit einem Motor 12 mit einem Magnetzündungssystem 14 gezeigt. Das Fahrzeug 10 weist ein konventionelles Zapfwellensystem (PTO) 16 auf, wie es in der Figur gezeigt wird, welches einen Bedienhebel bzw. eine Bedieneinrichtung 18 umfasst. Ein Bewegen der Bedieneinrichtung 18 in die gezeigte Stellung (die AUS-Stellung) nach links schafft eine Antriebsverbindung von dem Motor 12 zu einem Anbaugerät, wie einem Mähwerk (nicht gezeigt). Eine Stromleitung 22 ist mit einem positiven Anschluss einer Batterie bzw. einer Stromquelle 24 verbunden. Eine zweite Stromleitung 28 ist mit einer Lichtmaschine an dem Fahrzeug 10 und über eine Sicherung 30 mit der Stromleitung 22 verbunden. Ein Anlassermotor 34 ist über ein Anlassrelais 38 mit der Stromleitung 22 verbunden, so dass, wenn das Anlassrelais 38 aktiviert wird, dem Anlassermotor 34 Strom zur Verfügung gestellt wird, um den Motor 12 anzulassen. Eine schaltbare Stromleitung 40 ist mit einem Hauptschalter 44 über einen Anschluss 46 des Hauptschalters 44 verbunden.

Der Hauptschalter 44 ist als ein vierpoliger Schalter mit vier Stellungen dargestellt, der einen ersten Anschluss 50, einen zweiten und einen dritten Anschluss 52 und einen vierten Anschluss 54 aufweist. Der Hauptschalter 44 wird in der AUS-Stellung gezeigt, in der die Anschlüsse 50 und 52 offen sind und der Anschluss 54 über einen Anschluss 60 geerdet ist. In der nächsten Stellung des Hauptschalters 44 (Licht/Betriebs-Stellung) ist der Anschluss 50 mit einem Anschluss 64 verbunden, um den Anschluss 50 mit der schaltbaren Stromleitung 40 zu verbinden, welcher über die Anschlüsse 46 und 52 mit der Stromleitung 28 in Verbindung steht. Ein Fahrzeugbeleuchtungssystem, welches allgemein mit 68 bezeichnet ist, ist mit dem Anschluss 64 verbunden und in der zweiten Stellung des Hauptschalters 44 aktiviert. Der Anschluss 46, der in allen Stellungen, außer der AUS-Stellung des Hauptschalters 44 mit Strom beaufschlagt ist, ist ebenfalls mit einem Sicherheitsschaltkreis, der allgemein mit 70 bezeichnet ist, verbunden. Der Anschluss 54, welcher mit Masse verbunden ist, wenn sich der Hauptschalter 44 in seiner AUS-Stellung (gezeigt) und in den übrigen drei Stellungen (Licht/Betrieb, Betrieb und Start) offen ist, erdet das Magnetzündungssystem 14 in der AUS-Stellung über eine Leitung 72, um den Motor 12 abzustellen. In der letzten Stellung (Start) des Hauptschalters 44, wird Strom an das Anlassrelais 38 über eine Leitung 73 geliefert, um den Anlasskreis zu schließen und den Motor 12 anzulassen, wenn bestimmte Sicherheitsfunktion an dem Fahrzeug 10 vorliegen, um zu bewirken, dass der Sicherheitskreis 70 eine Leitung 78 welche mit dem Anlassrelais 38 verbunden ist, mit Strom beaufschlagt.

Der Sicherheitsschaltkreis 70 umfasst einen Zapfwellenschalter 80 mit einem ersten Anschluss 82, der mit der Leitung 72 verbunden ist, und einem zweiten Anschluss 84, welcher mit einem ersten Anschluss 88 eines Bremsschalters 90 verbunden ist. Ein Anschluss 92 des Zapfwellenschalters 80 ist mit einem Anschluss 94 des Hauptschalters 44 verbunden und wird mit Strom beaufschlagt, wenn der Hauptschalter 44 in seine letzte oder Start-Stellung bewegt wird. Der Zapfwellenschalter 80 befindet sich in der gezeigten Stellung, wenn die Zapfwelle ausgerückt ist, so dass ein geschlossener Kreis zwischen der Stromleitung 28 und dem Anschluss 88 des Bremsschalters 90 zur Verfügung gestellt wird. Wenn die Bremse geschlossen ist (gezeigt), ist der Anschluss 88 geöffnet und dass Anlassrelais 38 kann nicht aktiviert werden. Wenn die Bremse jedoch betätigt und die Zapfwelle ausgerückt ist, wird Strom zu der Leitung 73 über den Zapfwellenschalter 80 und den Bremsschalter 90 geliefert, wenn der Hauptschalter 44 in seine Start-Stellung gebracht wird.

Ein zweipoliger Sitzschalter 100 (in der Stellung gezeigt, in der keine Bedienungsperson anwesend ist) weist einen geerdeten Anschluss 102 auf und schließt einen ersten Anschluss 104, welcher mit einem Anschluss 106 des Bremsschalters 90 und einen zweiten Anschluss 108 auf, welcher mit einem Anschluss 112 des Zapfwellenschalters 80 verbunden ist. Der Sitzschalter 100 öffnet, um den Anschluss 102 nicht länger zu erden, wenn eine Bedienungsperson die richtige Stellung auf dem Fahrzeug 10 einnimmt.

Der Sicherheitsschaltkreis 70 weist einen ein Haltrelais aufweisenden Haltekreis, der im folgenden nur als Halterelais 120 bezeichnet wird, auf, welcher einen ersten schaltbaren Anschluss 122, welcher mit dem Eingang 108 des Sitzschalters 100 und mit dem Anschluss 112 des Zapfwellenschalters 80 verbunden ist, auf. Das Halterelais 120 weist auch einen zweiten schaltbaren Anschluss 124 auf, welcher mit einem Steueranschluss des Anlassrelais 38 verbunden ist. Der gegenüberliegende Anschluss der Solenoidsteuerung des Halterelais 120 ist mit dem Anschluss verbunden, so dass er mit Strom beaufschlagt wird, wann auch immer der Hauptschalter 44 von seiner AUS-Stellung wegbewegt wird. Der Anschluss 124 ist ebenso mit einem Anschluss eines Auswahlschalters 130 verbunden, bei welchem es sich um einen üblicherweise ausgeschalteten Tastschalter handelt, welcher den Anschluss 124 erdet, wenn der Schalter gedrückt ist. Ein Anschluss 126 des Halterelais 120 ist mit einem Anschluss des Richtungswahlschalters 134 verbunden, welcher mit einer Richtungssteuerungseinrichtung des Fahrzeugs 10 verbunden ist. Der Richtungswahlschalter 134 ist geöffnet (gezeigt), wenn die Vorwärtsfahrtrichtung ausgewählt ist, und ist geschlossen, um den Eingang zu erden, wenn die Rückwärtsfahrtrichtung gewählt ist.

Im Betrieb, wobei angenommen wird, dass das Fahrzeug 10 läuft und in einer Vorwärtsrichtung bei unbetätigter Bremse (Bremsschalter 90 ist AUS) arbeitet, ist die Leitung 72 nicht geerdet, so dass der Motor 12 betriebsbereit verbleibt. Wenn die Bedienungsperson es wünscht, das Fahrzeug 10 rückwärts ohne die Notwendigkeit des Betriebs der Zapfwelle zu bewegen, wird die Zapfwelle in ihre AUS-Stellung bewegt, um die Leitung zwischen den Anschlüssen 82 und 112 zu öffnen, um ein Erden der Leitung 72 und ein Deaktivieren des Motors 12 zu verhindern. Wenn es wünschenswert ist, die Zapfwelle bei Rückwärtsfahrt zu betreiben, drückt die Bedienungsperson nur den Auswahlschalter 130, um das Halterelais 120 zu aktivieren, wenn der Richtungswahlschalter 134 durch die Bewegung des Richtungswahlhebels in Rückwärtsfahrtstellung geschlossen ist. Das Halterelais 120 ist dann in der EIN-Stellung festgelegt und die Leitung 112 ist geöffnet, so dass die Leitung 72 nicht über die Anschlüsse 122 und 126 und den Richtungswahlschalter 134 geerdet wird, unter der Voraussetzung, dass die Bedienungsperson auf dem Sitz verbleibt und der Sitzschalter 100 geöffnet bleibt. Sobald das Halterelais 120 festgelegt ist, kann die Bedienungsperson den Auswahlschalter 130 loslassen, ohne den Motor 12 abzuschalten. Vergisst die Bedienungsperson den Auswahlschalter 130 zu drücken, bevor sie das Fahrzeug 10 auf Rückwärtsfahrt schaltet, wird die Leitung 72 über die Anschlüsse 82, 112, 122, 126 und 134 geerdet werden. Die Bedienungsperson kann jedoch schnell den Auswahlschalter 130 drücken, um das Halterelais 120 zu aktivieren und den Motor 12 weiter zu betreiben, bevor der Motor 12 vollständig abstirbt.

## Patentansprüche

1. Sicherheitsschaltung für ein Fahrzeug (10), welches sich auswählbar sowohl in Vorwärts- als auch in Rückwärtsrichtung über den Untergrund bewegen kann, mit einem Motor (12) und einer Zapfwelle (16), welche mittels einer Bedieneinrichtung (18) aktiviert bzw. deaktiviert werden kann, wobei die Sicherheitsschaltung einen Richtungswahlschalter (134), einen Zapfwellenschalter (80), der eine erste Stellung einnimmt, wenn die Zapfwelle aktiviert ist, und bei deaktivierter Zapfwelle eine zweite Stellung einnimmt, und einen Anwesenheitsschalter (100), der eine erste Stellung einnimmt, wenn eine Bedienungsperson eine vorbestimmte Position auf dem Fahrzeug (10) eingenommen hat, und eine zweite Stellung einnimmt, wenn die Bedienungsperson sich nicht in dieser Position befindet aufweist, **dadurch gekennzeichnet, dass** die Sicherheitsschaltung ein Halterelais (120) und einen Tastschalter (130) der eine betätigte und eine unbetätigte Stellung hat, aufweist und der Zapfwellenschalter (80) mit dem Halterelais (120) verbunden ist, welches mit dem Tastschalter (130) in Verbindung steht, wobei die Zapfwelle (16) wenn der Richtungswahlschalter (134) seine Stellung für Rückwärtsfahrt einnimmt, nur dann betrieben werden kann, wenn der Anwesentheitsschalter (100) sich in der ersten Stellung befindet und der Tastschalter (130) betätigt ist.

2. Sicherheitsschaltung nach Anspruch 1, **dadurch gekennzeichnet, dass** der Tastschalter (130) in Richtung seiner unbetätigten Stellung vorgespannt ist, und das Halterelais (120) einen Betrieb der Zapfwelle ermöglicht, wenn der Richtungswahlschalter (134) sich in seiner Stellung für Rückwärtsfahrt befindet, wenn der Tastschalter (130), nachdem er frei gegeben wurde, in seine unbetätigte Stellung zurückkehrt.

3. Sicherheitsschaltung nach Anspruch 1 oder 2, **dadurch gekennzeichnet, dass** die Sicherheitsschaltung nur ein einziges Halterelais (120) aufweist.

4. Sicherheitsschaltung nach einem oder mehreren der vorherigen Ansprüche, **gekennzeichnet durch** einen Bremsschalter (90), dessen Stellung davon abhängig ist, ob eine Fahrzeugbremse betätigt oder unbetätigt ist, und **dadurch**, dass der Anwesenheitsschalter (100) als ein zweipoliger Schalter ausgebildet ist, dessen erster Anschluss (104) mit dem Zapfwellenschalter (80) und dessen zweiter Anschluss (108) mit dem Bremsschalter (90) verbunden ist, wobei der Motor (12) deaktiviert wird, wenn der Zapfwellenschalter (80) aktiviert ist und sich der Anwesenheitsschalter (100) in seiner zweiten Stellung befindet, oder wenn der Bremsschalter (90) anzeigt, dass die Bremse unbetätigt ist und der Anwesenheitsschalter (100), sich in seiner zweiten Stellung befindet.

5. Sicherheitsschaltung nach einem oder mehreren der vorherigen Ansprüche, **dadurch gekennzeichnet, dass** das Halterelais (120) einen ersten Anschluss (126) aufweist, der mit dem Richtungswahlschalter (134) verbunden ist, einen zweiten Anschluss (122), der mit dem Zapfwellenschalter (80) und einem dritten Anschluss (124), der mit dem Tastschalter (130) verbunden ist und in einem aktivierten Zustand festgelegt wird, wenn der Tastschalter (130) betätigt ist und sich der Richtungswahlschalter (134) in seiner Stellung für Rückwärtsfahrt befindet.

6. Sicherheitsschaltung nach einem oder mehreren der vorherigen Ansprüche, **dadurch gekennzeichnet, dass** der Anwesenheitsschalter (100) einen Anschluss (108) aufweist, welcher mit einem Anschluss (122) des Halterelais (120) verbunden ist.

7. Fahrzeug (10), insbesondere ein Fahrzeug zur Rasen-, Garten- und Grundstückspflege mit einer Sicherheitsschaltung nach einem oder mehreren der vorherigen Ansprüche.

## Claims

1. Interlock circuit for a vehicle (10), which can selectively move in forward and also in reverse direction over the ground, with an engine (12) and a power take off system (16), which can be engaged or disengaged by means of a control means (18), wherein the interlock circuit has a direction selector switch (134), a power take off switch (80), which assumes a first position when the power take off system is engaged and assumes a second position when the power take off system is disengaged, and a seat switch (100), which assumes a first position when an operator has assumed a predetermined position on the vehicle (10) and assumes a second position when the operator is not in this position, **characterised in that** the interlock circuit has a latching relay (120) and an operator switch (130), which has an operative and a non-operative position, and the power take off switch (80) is connected to the latching relay (120), which connects to the operator switch (130), wherein when the direction selector switch (134) assumes its position for reverse operation, the power take off system (16) can only be operated when the seat switch (100) is located in the first position and the operator switch (130) has been operated.

2. Interlock circuit according to Claim 1, **characterised in that** the operator switch (130) is biased in the direction of its non-operative position, and the latching circuit (120) allows operation of the power take off system when the direction selector switch (134) is located in its position for reverse operation when the operator switch (130) returns to its non-operative position after it has been released.

3. Interlock circuit according to Claim 1 or 2, **characterised in that** the interlock circuit only has a single latching circuit (120).

4. Interlock circuit according to one or more of the previous claims, **characterised by** a brake switch (90), the position of which is dependent on whether a vehicle brake is engaged or disengaged, and **characterised in that** the seat switch (100) is configured as a two pole switch, the first input terminal (104) of which is connected to the power take off switch (80) and the second input terminal (108) of which is connected to the brake switch (90), wherein the engine (12) is deactivated when the power take off switch (80) is activated and the seat switch (100) is located in its second position, or when the brake switch (90) indicates that the brake is disengaged and the seat switch (100) is located in its second position.

5. Interlock circuit according to one or more of the previous claims, **characterised in that** the latching relay (120) has a first input terminal (126), which is connected to the direction selector switch (134), a second input terminal (122), which is connected to the power take off switch (80), and a third input terminal (124), which is connected to the operator switch (130) and is fixed in an activated state when the operator switch (130) is engaged and the direction selector switch (134) is located in its position for reverse operation.

6. Interlock circuit according to one or more of the previous claims, **characterised in that** the seat switch (100) has a terminal (108), which is connected to an input terminal (122) of the latching relay (120).

7. Vehicle (10), in particular a vehicle for lawn, garden and estate care, with an interlock circuit according to one or more of the previous claims.

## Revendications

1. Circuit de sécurité pour un véhicule (10), qui peut se déplacer sur le sol au choix en marche avant, de même qu'en marche arrière, comportant un moteur (12) et une prise de force (16), qui peut être activée et désactivée au moyen d'un dispositif de commande (18), le circuit de sécurité comportant un sélecteur de direction (134), un interrupteur pour la prise de force (80) qui est dans une première position, lorsque la prise de force est activée, et est dans une deuxième position, lorsque la prise de force est désactivée, et un interrupteur de présence (100) qui est dans une première position, lorsqu'une personne de service a pris place dans une position prédéterminée sur le véhicule (10), et est dans une deuxième position, lorsque la personne de service n'est pas cette position, **caractérisé en ce que** le circuit de sécurité comporte un relais d'arrêt (120) et un bouton-poussoir (130) qui a une position actionnée et une position non actionnée, et l'interrupteur pour la prise de force (80) est relié au relais d'arrêt (120), qui est relié au bouton-poussoir (130), sachant que, lorsque le sélecteur de direction (134) est amené dans sa position pour la marche arrière, la prise de force (16) ne peut être utilisée que si l'interrupteur de présence (100) est situé dans la première position et que le bouton-poussoir (130) est actionné.

2. Circuit de sécurité selon la revendication 1, **caractérisé en ce que** le bouton-poussoir (130) est précontraint vers sa position non actionnée et le relais d'arrêt (120) permet une utilisation de la prise de force lorsque le sélecteur de direction (134) est dans sa position pour la marche arrière, une fois que le bouton-poussoir (130), après avoir été libéré, revient dans sa position non actionnée.

3. Circuit de sécurité selon la revendication 1 ou 2, **caractérisé en ce que** le circuit de sécurité comporte seulement un seul relais d'arrêt (120).

4. Circuit de sécurité selon une ou plusieurs des revendications précédentes, **caractérisé par** un interrupteur de frein (90), dont la position dépend du fait qu'un frein du véhicule soit actionné ou non actionné, et par le fait que European Patent Application no. 01 118 208.6-1523 l'interrupteur de présence (100) est réalisé sous forme d'interrupteur à deux pôles, dont le premier raccord (104) est relié à l'interrupteur pour la prise de force (80) et dont le deuxième raccord (108) est relié à l'interrupteur de frein (90), le moteur (12) étant désactivé lorsque l'interrupteur pour la prise de force (80) est activé et que l'interrupteur de présence (100) est dans sa deuxième position, ou lorsque l'interrupteur de frein (90) signale que le frein n'est pas actionné et que l'interrupteur de présence (100) est dans sa deuxième position.

5. Circuit de sécurité selon une ou plusieurs des revendications précédentes, **caractérisé en ce que** le relais d'arrêt (120) comporte un premier raccord (126) qui est relié au sélecteur de direction (134), un deuxième raccord (122) qui est relié à l'interrupteur pour la prise de force (80), et un troisième raccord (124) qui est relié au bouton-poussoir (130), et est fixé dans une position activée lorsque le bouton-poussoir (130) est actionné et que le sélecteur de direction (134) est dans sa position pour la marche arrière.

6. Circuit de sécurité selon une ou plusieurs des revendications précédentes, **caractérisé en ce que** l'interrupteur de présence (100) comporte un raccord (108) qui est relié à un raccord (122) du relais d'arrêt (120).

7. Véhicule (10), en particulier un véhicule pour l'entretien des gazons, jardins et terrains, comportant un circuit de sécurité selon une ou plusieurs des revendications précédentes.
